# FASCICULE DE BREVET EUROPEEN

(11) **EP 1 817 574 B1**
(45) Date de publication et mention de la délivrance du brevet: **23.09.2015**
(21) Numéro de dépôt: 05817071.3
(22) Date de dépôt: 09.11.2005
(51) Int. Cl.: G01N 21/95

(54) **PROCEDE ET DISPOSITIF D'ECLAIRAGE POUR DETERMINER LA PRESENCE DE DEFAUTS SUR LA SURFACE DE LA BAGUE D'UN RECIPIENT**
BELEUCHTUNGSVERFAHREN UND -VORRICHTUNG ZUR BESTIMMUNG DES VORLIEGENS VON DEFEKTEN AUF DER OBERFLÄCHE EINES BEHÄLTERBUNDS
ILLUMINATION METHOD AND DEVICE FOR DETERMINING THE PRESENCE OF DEFECTS ON THE SURFACE OF A CONTAINER COLLAR

(30) Priorité: 09.11.2004 FR 0411907
(43) Date de publication de la demande: 15.08.2007
(73) Titulaire: Tiama, 69700 Montagny (FR)
(72) Inventeur: COLLE, Olivier, F-69600 Oullins (FR)
(74) Mandataire: Thibault, Jean-Marc
(86) Numéro de dépôt international: PCT/FR2005/002792
(87) Numéro de publication internationale: WO 2006/051217

(56) Documents cités:
- EP-A- 0 763 727
- WO-A-2004/040279
- US-A- 4 606 635
- US-A- 6 122 048
- US-A1- 2004 150 815

## Description

La présente invention concerne le domaine technique de l'inspection optoélectronique d'objets creux ou récipients au sens général à caractère transparent ou translucide tels que par exemple des bouteilles, des pots ou des flacons en verre en vue de déceler d'éventuels défauts de surface présentés par la bague d'un tel récipient.

L'objet de l'invention vise plus précisément le domaine de l'inspection de tels récipients en vue de déceler sur leur bague, la présence de défauts de surface correspondant à un surplus ou à un manque de matière, à des défauts appelés bouillons ou bulles, à des défauts correspondant à une bague écaillée ou ébréchée, ou à des défauts dits fils sur bague.

L'état de la technique a proposé différents dispositifs de contrôle de la qualité des bagues de récipients afin d'éliminer ceux qui comportent des défauts susceptibles d'affecter leur caractère esthétique ou plus grave, de présenter un réel danger pour l'utilisateur. Par exemple, il est connu un poste de détection comportant un système d'éclairage apte à fournir un faisceau incident concentré sur la surface supérieure de la bague. Une caméra est positionnée de manière à recevoir les faisceaux lumineux réfléchis qui sont transmis à une unité de traitement adaptée pour former une image de la surface de la bague. L'unité de traitement analyse l'image afin de détecter la présence éventuelle de défauts qui perturbent la réflexion de la lumière soit par réfraction, ce qui conduit à une absence localisée de lumière de sorte que le défaut apparaît en noir, soit par concentration de lumière de sorte que le défaut apparaît en blanc. Il est à noter que la demande de brevet US 2004/01508150 propose une installation d'inspection combinant, à la fois, un éclairage permettant aux défauts d'apparaître en noir et un éclairage permettant aux défauts d'apparaître en blanc.

Pour assurer un bon contrôle de la surface de la bague des récipients, il est connu qu'il convient de maîtriser l'angle incident du flux lumineux par rapport à la surface de la bague. Cependant, il a été constaté qu'une telle technique permet de détecter en tant que défauts, des bouillons qui sont situés à l'intérieur de la bague alors que le récipient comportant de tels bouillons en profondeur n'est pas à considérer comme défectueux. Par ailleurs, il a été constaté une difficulté dans le traitement des images pour détecter de manière fiable, un défaut en raison notamment de la présence dans l'image de parasites dus aux différentes réflexions de lumière sur la surface du récipient.

L'objet de l'invention vise donc à remédier aux inconvénients de l'état de la technique en proposant une technique d'inspection de la surface de la bague d'un récipient adaptée pour détecter, avec une grande fiabilité, de nombreux types de défauts susceptibles d'apparaître en évitant de prendre en compte en tant que défauts, des réflexions parasites de lumière et les bouillons de profondeur par exemple.

Pour atteindre un tel objectif, l'objet de l'invention vise à proposer un procédé d'inspection optique pour déterminer la présence de défauts sur la surface de la bague d'un récipient transparent ou translucide, le procédé comportant les étapes définies dans la revendication 1.

Il est prévu selon le procédé d'inspection optique, de bloquer les rayons lumineux éclairant, en dehors de la surface de la bague, la partie extérieure de la surface et/ou la partie intérieure de la surface de bague.

Un autre objet de l'invention est de proposer un dispositif d'éclairage pour un poste apte à déterminer sur une image la présence de défauts sur la surface de la bague d'un récipient transparent ou translucide. Conformément à l'invention, le dispositif d'éclairage comporte les caractéristiques selon la revendication 2.

Selon une variante de réalisation, les moyens pour bloquer les rayons lumineux en dehors de la surface de la bague sont réalisés par un masque bloquant les rayons lumineux à la partie extérieure de la surface de bague et/ou par un masque bloquant les rayons lumineux à la partie intérieure de la surface de bague.

Selon une autre variante de réalisation, les moyens pour bloquer les rayons lumineux en dehors de la surface de la bague sont réalisés par un écran à cristaux liquide piloté en anneaux concentriques pouvant être rendus transparents ou opaques, de manière indépendante, à l'aide d'une unité de commande.

Selon cette variante de réalisation, l'unité de commande de l'écran à cristaux liquide est commandée pour mémoriser et/ou modifier, de manière interactive, la configuration de commande électrique des anneaux concentriques.

Selon une caractéristique préférée de réalisation, le dispositif d'éclairage comporte une plaque transparente anti-reflets servant de support au(x) masque(s).

Selon une autre caractéristique avantageuse de l'invention, le système d'éclairage est réalisé par une source de lumière diffuse et uniforme de forme hémisphérique.

Selon une première variante de réalisation, le système d'éclairage comporte un hémisphère d'intégration illuminé par l'intérieur à l'aide d'un anneau de sources lumineuses situées à la base de l'hémisphère.

Selon une deuxième variante de réalisation, le système d'éclairage est réalisé par un hémisphère translucide et diffusant éclairé par l'extérieur, par une série de sources lumineuses orientées vers le centre dudit hémisphère.

Selon encore une troisième variante de réalisation, le système d'éclairage comporte une source uniforme et diffuse de forme cylindrique et/ou une source uniforme et diffuse de forme annulaire large et/ou une source uniforme et diffuse de forme conique.

Il doit être considéré que le système d'éclairage comporte une zone de visée pour une caméra centrée sur l'axe de symétrie du système d'éclairage.

Aussi, avantageusement, le dispositif d'éclairage comporte un système d'éclairage complémentaire du système d'éclairage, dans la zone de visée de la caméra, un élément optique étant interposé pour permettre d'une part la réflexion ou la transmission en direction de la surface de bague, de l'éclairement fourni pour le système d'éclairage complémentaire, et d'autre part respectivement la transmission et la réflexion en direction de la caméra, des rayons lumineux réfléchis par la surface de bague.

Avantageusement, le dispositif d'éclairage comporte des moyens de commande du système d'éclairage et du système d'éclairage complémentaire permettant de sélectionner le fonctionnement combiné ou individuel des systèmes d'éclairage.

Un autre aspect de l'invention est de proposer un poste d'inspection optique pour déterminer la présence de défauts sur la surface de la bague d'un récipient transparent ou translucide. Conformément à l'invention, ce poste comporte :
- un dispositif d'éclairage conforme à l'invention,
- une caméra placée pour récupérer le faisceau lumineux réfléchi par la surface de la bague du récipient,
- et une unité de traitement et d'analyse reliée à la caméra et adaptée pour analyser l'image obtenue à partir du signal vidéo délivré par la caméra afin de déterminer la présence d'un défaut de surface.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en coupe élévation montrant une première variante de réalisation d'un dispositif d'éclairage conforme à l'invention faisant partie d'un poste d'inspection.

Les **fig. 2** et **3** illustrent deux autres variantes de réalisation d'un dispositif d'éclairage conforme à l'invention.

La **fig. 4** est un exemple d'une image obtenue conformément à l'invention.

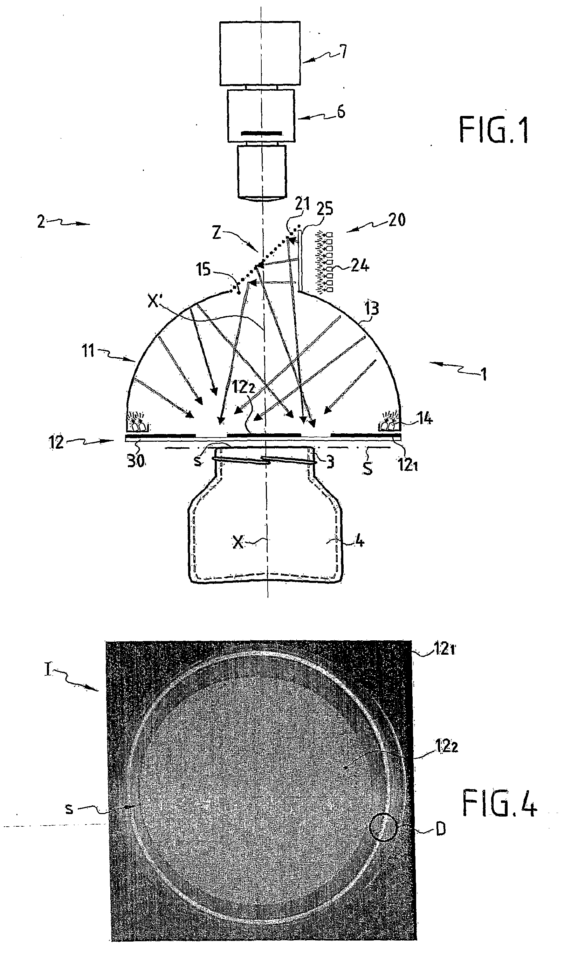

La **fig. 1** illustre un dispositif d'éclairage **1** conforme à l'invention pour un poste **2** de détection de défauts de surface susceptibles d'apparaître sur la surface **s** de la bague **3** d'un récipient transparent ou translucide **4** présentant un axe de symétrie ou de révolution **X.**

De manière classique, un tel poste de détection **2** comporte une caméra matricielle **6** placée pour récupérer le faisceau lumineux réfléchi par la surface s de la bague **3** du récipient **4**. Cette caméra **6** équipée de son objectif est reliée à une unité de traitement et d'analyse **7** adaptée pour former une image à partir du signal vidéo délivré par la caméra. Cette unité de traitement et d'analyse **7** comporte des moyens algorithmique de traitement permettant de déterminer dans l'image la présence ou non d'un défaut de surface tel que par exemple, bavure, bulle, fils, bouillon, crevé, etc. L'unité de traitement et d'analyse **7** ne sera pas décrite plus précisément dans la mesure où elle ne fait pas partie de l'objet de l'invention et fait partie des connaissances de l'homme du métier.

Un tel poste de détection **2** comprenant le dispositif d'éclairage **1** selon l'invention permet la mise en oeuvre d'un procédé optique de détection de la présence éventuelle des défauts apparaissant sur la surface de la bague **3**.

Conformément à l'invention, le dispositif d'éclairage **1** comporte un système d'éclairage **11** apportant en tout point d'une surface **S** englobant la surface **s** de la bague **3** du récipient, un éclairement quasi-constant selon tout ou partie des incidences comprises dans au plus l'angle solide 2 π stéradian. Il doit être compris que le système d'éclairage **11** est adapté de manière que tout point de la surface **S** reçoit une illumination uniforme selon plusieurs, voire toutes les directions d'au moins une partie de l'angle solide 2 π stéradian. Cette surface **S** englobe la surface s de la bague **3** de manière qu'un tel éclairement quasi-constant avec des incidences multiples soit apporté en chaque point de la surface s de la bague **3**.

Selon une autre caractéristique de l'invention, le dispositif d'éclairage **1** comporte des moyens **12** pour bloquer au moins une partie des rayons lumineux éclairant en dehors de la surface **s** de la bague **3** et susceptibles de provoquer des reflets parasites dans l'image de la bague. En d'autres termes, ces moyens de blocage **12** qui seront décrits plus précisément dans la suite de la description, permettent d'éviter que la caméra **6** reçoive les faisceaux lumineux parasites réfléchis par exemple par les filets de la bague ou les parois ou le fond du récipient.

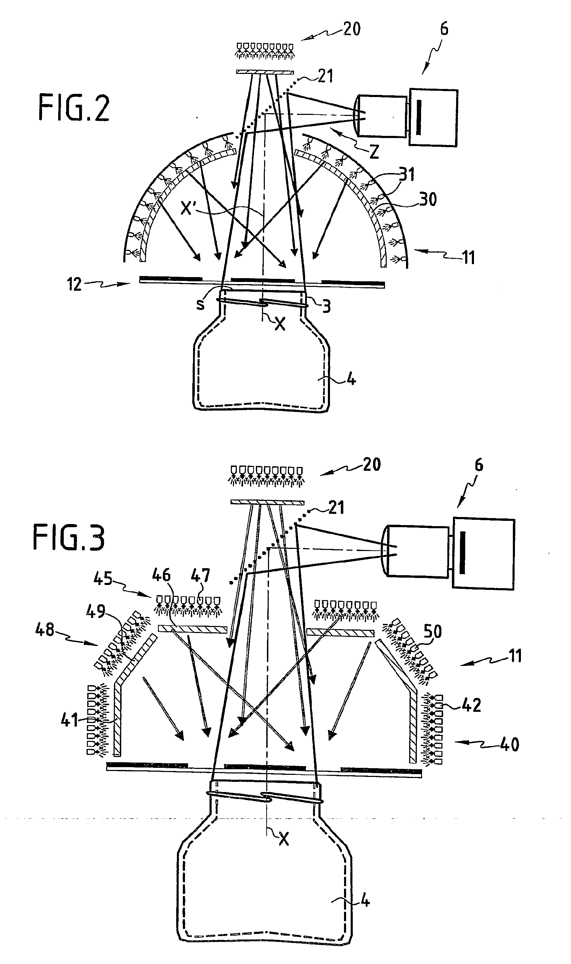

Tel que cela ressort des **fig. 1** et **2**, le système d'éclairage **11** est réalisé avantageusement par une source de lumière diffuse et uniforme de forme hémisphérique.

Dans l'exemple illustré à la **fig. 1**, le système d'éclairage **11** comporte un hémisphère **13** d'intégration illuminé par l'intérieur à l'aide d'un anneau de sources lumineuses **14** situées à la base de l'hémisphère. Ces sources lumineuses **14** telles que des diodes électroluminescentes, des fibres optiques, des lampes à incandescence ou halogène ou toutes autres sources de lumière, sont placées de manière à diriger vers le haut de l'hémisphère **13** leur lumière de sorte que toute la paroi interne de l'hémisphère **13** est éclairée. La paroi interne de l'hémisphère **13** est adaptée en étant par exemple recouverte par un revêtement blanc, en vue de réfléchir avec la même énergie et de manière diffuse, la lumière dans toutes les directions. La lumière réfléchie par la paroi interne de l'hémisphère **13** illumine la surface **S** qui se présente ainsi sous la forme d'un disque. Chaque point de cette surface **S** est considéré comme étant éclairé par une source diffuse, homogène et omnidirectionnelle. Cette surface **S** est située de manière à englober la surface **s** de la bague **3** du récipient à inspecter. Ainsi, tel que cela ressort de la **fig. 1**, la surface **s** est placée pour s'étendre dans le plan dans lequel se situe la surface d'éclairement **S**. Il est à noter que le récipient **4** est placé de manière que son axe de symétrie **X** se trouve placé de manière coaxial par rapport à l'axe de symétrie ou de révolution **X'** de l'hémisphère **13**.

Selon une autre caractéristique de l'invention, le système d'éclairage **11** comporte une zone de visée **Z** pour la caméra **6**, centrée sur l'axe de symétrie **X**' de l'hémisphère **13**. Cette zone de visée **Z** traverse une ouverture **15** aménagée dans l'hémisphère **13** et centrée sur l'axe **X**'. La caméra **6** peut ainsi à travers la zone de visée **Z**, récupérer les faisceaux réfléchis par la surface **s** de la bague **3**. Il est à noter que compte tenu de la présence de l'ouverture **15** dans l'hémisphère **13**, chaque point de la surface **s** ne reçoit pas une illumination provenant de l'angle solide défini par l'ouverture **15**. En d'autres termes, chaque point de la surface **s** reçoit une illumination uniforme selon toutes les directions de l'angle solide 2 π stéradian défini par l'hémisphère, excepté pour l'angle solide défini par l'ouverture **15**.

Aussi, selon une caractéristique préférée de réalisation, le dispositif d'éclairage **1** comporte un système d'éclairage **20** complémentaire dans la zone de visée **Z**. Un tel système d'éclairage complémentaire **20** permet ainsi de combler l'absence d'incidence dans l'angle solide défini par l'ouverture **15**. La mise en oeuvre combinée des systèmes d'éclairage **11** et **20** permet que chaque point de la surface **S** reçoive une illumination uniforme selon toutes les directions de l'angle solide défini par l'hémisphère **13**, égal sensiblement à 2 π stéradian.

Bien entendu, le système d'éclairage complémentaire **20** comporte un élément optique **21** permettant de séparer les faisceaux réfléchis par la surface de la bague **3** et le faisceau lumineux créé par le système d'éclairage complémentaire **20**. Par exemple, un tel élément optique **21** peut être réalisé par un miroir semi-réfléchissant ou un séparateur de faisceaux. Dans l'exemple illustré à la **fig. 1**, l'élément optique **21** permet d'une part, d'assurer la transmission des rayons lumineux réfléchis par la surface de la bague, en direction de la caméra **6** qui est placée coaxialement à l'axe **X'** de l'hémisphère **13** et d'autre part, la réflexion en direction de l'intérieur de l'hémisphère **13**, de l'éclairement fourni par le système d'éclairage complémentaire **20.** Par exemple, le système d'éclairage complémentaire **20** est constitué par une source diffuse plane et homogène réalisée par une série par exemple de diodes électroluminescentes **24** disposées dans un plan et devant lesquels est placé un écran **25** diffuseur en transmission.

Bien entendu, il peut être prévu d'inverser la position relative entre le système d'éclairage complémentaire **20** et la caméra **6**. Ainsi, tel que cela ressort plus précisément de la **fig. 2**, le système d'éclairage complémentaire **20** est disposé de manière coaxiale à l'axe de symétrie **X'** de l'hémisphère **13** tandis que l'axe de visée **Z** de la caméra **6** est situé perpendiculairement à l'axe de symétrie **X'**. Selon cet exemple de réalisation, l'élément optique **21** permet d'une part la transmission de l'éclairement vers l'intérieur de l'hémisphère **13**, et d'autre part la réflexion en direction de la caméra **6**, des rayons réfléchis provenant de la surface **s** de la bague **3**.

Dans les exemples illustrés aux **fig. 1** et **2**, les moyens de blocage **12** sont réalisés par un masque **12₁** bloquant en dehors de la surface **s** de la bague **3**, les rayons lumineux situés à la partie extérieure de la surface **s** de la bague **3** et/ou par un masque **12₂** bloquant les rayons lumineux à la partie intérieure de la surface **s** de la bague. A cet effet, il doit être considéré que la surface **s** de bague présente une forme annulaire comme illustré à la **figue 4**. Aussi, le masque **12₂** présente une forme de disque de diamètre inférieur au diamètre interne de la bague **3** de manière à bloquer les rayons lumineux passant au centre de la bague c'est-à-dire entrant à l'intérieur du récipient. Le masque **12₁** se présente sous la forme d'un anneau dont le diamètre interne est supérieur au diamètre externe de la bague **3**. Le masque **12₁** présente de préférence un diamètre externe sensiblement égal au diamètre de l'hémisphère de manière à bloquer tous les rayons lumineux situés à l'extérieur de la surface de bague.

Selon une variante de réalisation, les masques **12₁** et **12₂** sont portés par une plaque transparente anti-reflets **30** montée sensiblement à la base de l'hémisphère **13**. Les masques **12₁** et **12₂** qui présentent bien entendu un caractère opaque peuvent constituer des éléments interchangeables de diamètres différents s'adaptant aux dimensions des bagues des récipients. De plus, le masque **12₁** peut être réalisé par un diaphragme à iris.

Selon une autre variante de réalisation, les moyens de blocage **12** sont réalisés par un écran à cristaux liquide, dont les électrodes de polarisation des cristaux liquide sont découpées en anneaux concentriques pouvant être alimentés électriquement séparément, de manière que chaque anneau de l'écran puisse être dans un état variant de l'opaque à transparent indépendamment des autres. Ainsi, les anneaux sont commandés électriquement de manière à laisser transparent uniquement les anneaux qui permettent de laisser passer l'éclairage sur la bague. Les anneaux intérieurs sont alors alimentés pour être rendus opaques, de manière que l'écran bloque les rayons lumineux à l'intérieur de la bague (même fonction que le masque **12₂**). De même, les anneaux extérieurs bloquent la lumière incidente sur l'extérieur de la bague (même fonction que le masque **12₁**). L'écran à cristaux liquide remplit donc la fonction de blocage des rayons lumineux susceptibles de provoquer des reflets parasites dans l'image de la bague.

Le dispositif comporte, également, une unité électronique de commande pilotée par logiciel, permettant de sélectionner, électriquement et sans équipement variable, les dimensions des anneaux extérieur et intérieur. Le dispositif permet donc de mémoriser les réglages des masques et/ou de les modifier de manière interactive en contrôlant, directement sur une unité de visualisation des images, les effets produits. L'avantage de cette variante est d'éviter le recours à des équipements variables.

Avantageusement, l'écran à cristaux liquide est assemblé de manière à ne pas provoquer de reflets directs de la lumière sur ses faces extérieures.

La mise en oeuvre du dispositif d'éclairage **1** conforme à l'invention dans un poste d'inspection **2** découle directement de la description qui précède.

Pour déterminer la présence de défauts sur la surface **s** d'un récipient **4**, le procédé consiste à éclairer à l'aide d'au moins un système d'éclairage **11** et/ou **20** apportant en tout point d'une surface **S** englobant la surface **s** de la bague, un éclairement quasi-constant selon tout ou partie des incidences comprises dans l'angle solide au plus égal 2 π stéradian. Le procédé vise aussi à bloquer au moins une partie des rayons lumineux éclairant en dehors de la surface s de la bague **3** et susceptibles de provoquer des reflets parasites dans l'image de la bague. A cet égard, il peut être choisi de bloquer en dehors de la surface **s** de bague les rayons lumineux éclairants, soit la partie extérieure de la surface **s** de la bague, soit la partie intérieure de la surface **s** de la bague, soit les parties intérieure et extérieure de la surface **s** de la bague.

Les rayons lumineux réfléchis par la surface **s** de bague sont récupérés par la caméra **6** qui forment une image **I** qui est ensuite traitée pour déterminer des défauts de surface. Tel que cela ressort de la **fig. 4**, l'unité de traitement et d'analyse **7** comporte des moyens pour déterminer les défauts de surface **D** apparaissant noirs ou blancs tels que des excès ou des manques de matière, des ébréchures, des bulles, des bouillons de surface, des fils, etc.

Dans l'exemple illustré à la **fig. 1**, le système d'éclairage **11** est constitué par une source de lumière diffuse et uniforme de forme hémisphérique, réalisé par un hémisphère **13** à la base duquel est placée une série de sources lumineuses **14.**

La **fig. 2** illustre un autre exemple de réalisation d'un système d'éclairage **11** conforme à l'invention réalisé par un hémisphère translucide et diffusant **30** éclairé par l'extérieur, par une série de sources lumineuses **31** orientées vers le centre dudit hémisphère.

La **fig. 3** illustre une autre variante de réalisation d'un système d'éclairage **11** conforme à l'invention comportant :
- une source uniforme et diffuse de forme cylindrique **40** constituée par un cylindre translucide et diffusant **41** éclairé par l'extérieur, par une série de sources lumineuses **42**,
- et/ou une source uniforme et diffuse de forme annulaire large **45** centrée sur l'axe **X** du récipient **4** et constituée par une plaque translucide et diffusante **46** éclairée par l'extérieur, par une série de sources lumineuses **47**,
- et/ou une source uniforme et diffuse de forme conique **48** comportant une plaque conique translucide et diffusante **49** éclairée par l'extérieur, par une série de sources lumineuses **50**.

Il doit être considéré que le système d'éclairage **11** selon l'invention est réalisé par l'une et/ou l'autre des sources uniformes et diffuses **40**, **45**, **48**. Ces sources uniformes et diffuses **40**, **45**, **48** sont commandées individuellement ou en combinaison en fonction de l'inspection souhaitée.

L'invention n'est pas limitée aux exemples décrits et représentés car diverses modifications peuvent y être apportées sans sortir de son cadre.

## Revendications

1. Procédé d'inspection optique pour déterminer la présence de défauts sur la surface (**s**) de la bague (**3**) d'un récipient (**4**) transparent ou translucide, le procédé comportant les étapes suivantes :
- éclairer au moins la surface de la bague (**s**) du récipient (**4**) à l'aide d'un système d'éclairage (11, 20) apportant en tout point d'une surface englobant la surface (s) de la bague (3), un éclairement quasi-constant selon tout ou partie des incidences comprises dans au moins une partie de l'angle solide 2 π stéradian,
- à former une image de ladite surface de la bague,
- et à analyser l'image afin de déterminer la présence d'un défaut sur la surface de la bague,
**caractérisé en ce :**
- **qu'**on bloque les rayons lumineux susceptibles de provoquer des reflets parasites dans l'image de la bague, lesdits rayons lumineux éclairant, en dehors de la surface (s) de la bague (3), la partie extérieure de la surface (s) et/ ou la partie intérieure de la surface (s) de la bague.

2. Dispositif d'éclairage pour un poste (**2**) apte à déterminer sur une image, la présence de défauts sur la surface (**s**) de la bague d'un récipient (**4**) transparent ou translucide ledit dispositif comportant :
- au moins un système d'éclairage (11, 20) apportant en tout point d'une surface englobant la surface (s) de bague, un éclairement quasi-constant selon tout ou partie des incidences comprises dans au moins une partie de l'angle solide 2 π stéradian,
**caractérisé en ce qu'**il comporte des moyens (12) pour bloquer les rayons lumineux en dehors de la surface de la bague, réalisés par un masque (**12₁**) bloquant les rayons lumineux à la partie extérieure de la surface (**s**) de bague et/ou par un masque (**12₂**) bloquant les rayons lumineux à la partie intérieure de la surface de la bague, ou par un écran à cristaux liquides piloté en anneaux concentriques pouvant être rendus transparents ou opaques, de manière indépendante, à l'aide d'une unité de commande.

3. Dispositif d'éclairage selon la revendication 2, **caractérisé en ce que** l'unité de commande de l'écran à cristaux liquides est commandée pour mémoriser et/ou modifier, de manière interactive, la configuration de commande électrique des anneaux concentriques.

4. Dispositif d'éclairage selon la revendication 2, **caractérisé en ce qu'**il comporte une plaque transparente anti-reflets (**30**) servant de support au(x) masque(s) (**12₁**, **12₂**).

5. Dispositif d'éclairage selon la revendication 2, **caractérisé en ce que** le système d'éclairage (**11**) est réalisé par une source de lumière diffuse et uniforme de forme hémisphérique.

6. Dispositif d'éclairage selon la revendication 5, **caractérisé en ce que** le système d'éclairage (**11**) comporte un hémisphère (**13**) d'intégration illuminé par l'intérieur à l'aide d'un anneau de sources lumineuses (**14**) situées à la base de l'hémisphère.

7. Dispositif d'éclairage selon la revendication 5, **caractérisé en ce que** le système d'éclairage (**11**) est réalisé par un hémisphère translucide et diffusant (**30**) éclairé par l'extérieur, par une série de sources lumineuses (**31**) orientées vers le centre dudit hémisphère.

8. Dispositif d'éclairage selon la revendication 2, **caractérisé en ce que** le système d'éclairage (**11**) comporte au moins une source uniforme et diffuse de forme cylindrique (**40**) et/ou une source uniforme et diffuse de forme annulaire large (**45**) et/ou une source uniforme et diffuse de forme conique (**48**).

9. Dispositif d'éclairage selon l'une des revendications 2 et 5 à 8, **caractérisé en ce que** le système d'éclairage (**11**) comporte une zone de visée (**Z**) pour une caméra (**6**) centrée sur l'axe de symétrie du système d'éclairage.

10. Dispositif d'éclairage selon la revendication 9, **caractérisé en ce qu'**il comporte un système d'éclairage (**20**) complémentaire du système d'éclairage (**11**), dans la zone de visée (**Z**) de la caméra, un élément optique (**21**) étant interposé pour permettre d'une part la réflexion ou la transmission en direction de la surface (**s**) de bague, de l'éclairement fourni pour le système d'éclairage complémentaire (**20**), et d'autre part respectivement la transmission et la réflexion en direction de la caméra (**6**), des rayons lumineux réfléchis par la surface (**s**) de bague.

11. Dispositif d'éclairage selon la revendication 10, **caractérisé en ce qu'**il comporte des moyens de commande du système d'éclairage (**11**) et du système d'éclairage complémentaire (**20**) permettant de sélectionner le fonctionnement combiné ou individuel des systèmes d'éclairage (**11, 20, 40, 45, 48**).

12. Poste d'inspection optique pour déterminer la présence de défauts sur la surface de la bague d'un récipient (**4**) transparent ou translucide **caractérisé en ce qu'**il comporte :
- un dispositif d'éclairage (1) conforme à l'une des revendications 2 à 11,
- une caméra (6) placée pour récupérer le faisceau lumineux réfléchi par la surface (s) de la bague du récipient,
- et une unité de traitement et d'analyse (7) reliée à la caméra (6) et adaptée pour analyser l'image obtenue à partir du signal vidéo délivré par la caméra afin de déterminer la présence d'un défaut de surface.

## Patentansprüche

1. Optisches Prüfverfahren, um das Vorliegen von Defekten auf der Oberfläche (s) des Bundes (3) eines durchsichtigen oder durchscheinenden Behälters (4) zu bestimmen, wobei das Verfahren die folgenden Schritte umfasst:
- Beleuchten mindestens der Oberfläche des Bundes (s) des Behälters (4) mit Hilfe eines Beleuchtungssystems (11, 20), das an jedem Punkt einer Fläche, die die Oberfläche (s) des Bundes (3) umgibt, eine gleichsam konstante Beleuchtung entlang der Gesamtheit oder eines Teils der Eintrittswinkel, die in mindestens einem Teil des Raumwinkels 2 π Steradiant enthalten sind, liefert,
- Erstellen eines Bildes von der Oberfläche des Bundes
- und Analysieren des Bildes, um das Vorliegen eines Defekts auf der Oberfläche des Bundes zu bestimmen,
**dadurch gekennzeichnet, dass**:
- die Lichtstrahlen, die Störreflexionen in dem Bilde des Bundes hervorrufen können, blockiert werden, wobei diese Lichtstrahlen außerhalb der Oberfläche (s) des Bundes (3) den äußeren Teil der Oberfläche (s) und/oder den inneren Teil der Oberfläche (s) des Bundes beleuchten.

2. Beleuchtungsvorrichtung für eine Station (2), die geeignet ist, auf einem Bild das Vorliegen von Defekten auf der Oberfläche (s) des Bundes eines durchsichtigen oder durchscheinenden Behälters (4) zu bestimmen, wobei die Vorrichtung umfasst:
- mindestens ein Beleuchtungssystem (11, 20), das an jedem Punkt einer Fläche, die die Oberfläche (s) des Bundes umgibt, eine gleichsam konstante Beleuchtung entlang der Gesamtheit oder eines Teils der Eintrittswinkel, die in mindestens einem Teil des Raumwinkels 2 π Steradiant enthalten sind, liefert,
**dadurch gekennzeichnet, dass** sie Mittel (12) umfasst, um die Lichtstrahlen außerhalb der Oberfläche des Bundes zu blockieren, die von einer Maske (12₁), die die Lichtstrahlen am äußeren Teil der Oberfläche (s) des Ringes blockiert, und von einer Maske (12₂), die die Lichtstrahlen am inneren Teil der Oberfläche des Ringes blockiert, oder von einem Flüssigkristallbildschirm gebildet sind, der in konzentrischen Ringen, die auf unabhängige Weise durchsichtig oder durchscheinend gemacht werden können, mit Hilfe einer Steuereinheit gesteuert werden kann.

3. Beleuchtungsvorrichtung nach Anspruch 2, **dadurch gekennzeichnet, dass** die Steuereinheit des Flüssigkristallbildschirms derart gesteuert wird, dass sie auf interaktive Weise die elektrische Steuerkonfiguration der konzentrischen Ringe speichert und/oder verändert.

4. Beleuchtungsvorrichtung nach Anspruch 2, **dadurch gekennzeichnet, dass** sie eine durchsichtige Antireflexplatte (30) umfasst, die als Träger für die Maske(n) (12₁, 12₂) dient.

5. Beleuchtungsvorrichtung nach Anspruch 2, **dadurch gekennzeichnet, dass** das Beleuchtungssystem (11) von einer diffusen und gleichförmigen Lichtquelle in Halbkugelform verwirklicht ist.

6. Beleuchtungsvorrichtung nach Anspruch 5, **dadurch gekennzeichnet, dass** das Beleuchtungssystem (11) eine Integrationshalbkugel (13) umfasst, die von innen mit Hilfe eines Ringes von Lichtquellen (14), die sich an der Basis der Halbkugel befinden, erleuchtet wird.

7. Beleuchtungsvorrichtung nach Anspruch 5, **dadurch gekennzeichnet, dass** das Beleuchtungssystem (11) von einer durchscheinenden und diffundierenden Halbkugel (30), die von außen durch eine Reihe von Lichtquellen (31), die zur Mitte der Halbkugel gerichtet sind, beleuchtet wird, gebildet ist.

8. Beleuchtungsvorrichtung nach Anspruch 2, **dadurch gekennzeichnet, dass** das Beleuchtungssystem (11) mindestens eine gleichförmige und diffuse Lichtquelle von zylindrischer Form (40) und/oder eine gleichförmige und diffuse Lichtquelle von breiter Ringform (45) und/oder eine gleichförmige und diffuse Lichtquelle von konischer Form (48) umfasst.

9. Beleuchtungsvorrichtung nach einem der Ansprüche 2 und 5 bis 8, **dadurch gekennzeichnet, dass** das Beleuchtungssystem (11) eine Zielzone (Z) für eine Kamera (6) umfasst, die auf der Symmetrieachse des Beleuchtungssystems zentriert ist.

10. Beleuchtungsvorrichtung nach Anspruch 9, **dadurch gekennzeichnet, dass** es ein komplementäres Beleuchtungssystem (20) zu dem Beleuchtungssystem (11) in der Zielzone (Z) der Kamera umfasst, wobei ein optisches Element (21) dazwischen angeordnet ist, um einerseits die Reflexion oder Übertragung in Richtung der Oberfläche (s) des Bundes der von dem komplementären Beleuchtungssystem (20) gelieferten Beleuchtung und andererseits die Übertragung bzw. Reflexion der von der Oberfläche (s) des Ringes reflektierten Lichtstrahlen in Richtung der Kamera (6) zu ermöglichen.

11. Beleuchtungsvorrichtung nach Anspruch 10, **dadurch gekennzeichnet, dass** sie Mittel zur Steuerung des Beleuchtungssystems (11) und des komplementären Beleuchtungssystems (20) umfasst, die es ermöglichen, die kombinierte oder individuelle Funktion der Beleuchtungssysteme (11,20, 40, 45, 48) auszuwählen.

12. Optische Prüfstation, um das Vorliegen von Defekten auf der Oberfläche des Bundes eines durchsichtigen oder durchscheinenden Behälters (4) zu bestimmen, **dadurch gekennzeichnet, dass** sie umfasst:
- eine Beleuchtungsvorrichtung (1) nach einem der Ansprüche 1 bis 11,
- eine Kamera (6), die derart angeordnet ist, dass sie den von der Oberfläche (s) des Bundes des Behälters reflektierten Lichtstrahl einfängt,
- und eine Verarbeitungs- und Analyseeinheit (7), die mit der Kamera (6) verbunden und dazu vorgesehen ist, das aus dem von der Kamera gelieferten Videosignal erhaltene Bild zu analysieren, um das Vorliegen eines Oberflächendefekts zu bestimmen.

## Claims

1. An optical inspection method for determining the presence of defects on the surface (s) of the collar (3) of a transparent or translucent container (4), the method including the following steps:
- illuminating at least the surface of the collar (s) of the container (4) by means of an illuminating system (11, 20) providing any point of a surface encompassing the surface (s) of the collar (3), with quasi-constant illumination according to the totality or part of the incidences included in at least one portion of the 2 π steradian solid angle;
- forming an image of said collar surface; and
- analyzing the image so as to determine the presence of a defect on the surface of the collar,
the method being **characterized in that**:
- blocking is performed of the light rays capable of causing stray reflections in the image of the collar, said light rays illuminating outside the surface (s) of the collar (3), the outer portion of the surface (s) and/or the inner portion of the surface (s) of the collar.

2. An illumination device for a station (2) capable of determining on an image, the presence of defects on the surface (s) of the collar of a transparent or translucent container (4), said device including:
- at least one illuminating system (11, 20) providing any point of a surface encompassing the collar surface (s), with quasi-constant illumination according to the totality or part of the incidences included in at least one portion of the 2 π steradian solid angle,
the device being **characterized in that** it includes means (12) for blocking the light rays outside the surface of the collar, which means are made by
- a mask (12₁) blocking the light rays at the outer portion of the collar surface (s) and/or by a mask (12₂) blocking the light rays at the inner portion of the collar surface; or by
- a liquid crystal screen with controlled concentric rings which may be made transparent or opaque independently, by means of a control unit.

3. An illumination device according to claim 2, **characterized in that** the unit for controlling the liquid crystal screen is controlled in order to store and/or change, interactively, the electric control configuration of the concentric rings.

4. An illumination device according to claim 2, **characterized in that** it includes an anti-reflection transparent plate (30) which is used as a support for the mask(s) (12₁, 12₂).

5. An illumination device according to claim 2, **characterized in that** the illumination system (11) is made by a diffuse and uniform light source with a hemispherical shape.

6. An illumination device according to claim 5, **characterized in that** the illumination system (11) includes an integration hemisphere (13) illuminated from the inside by means of a ring of light sources (14) located at the base of the hemisphere.

7. An illumination device according to claim 5, **characterized in that** the illumination system (11) is made by a translucent and diffusing hemisphere (30) illuminated from the outside, by a series of light sources (31) oriented towards the center of said hemisphere.

8. An illumination device according to claim 2, **characterized in that** the illumination system (11) includes at least one uniform and diffuse source with a cylindrical shape (40) and/or a uniform and diffuse source with a wide annular shape (45) and/or a uniform and diffuse source with a conical shape (48).

9. An illumination device according to any one of claims 2 and 5 to 8, **characterized in that** the illumination system (11) includes a sighting area (Z) for a camera (6) centered on the axis of symmetry of the illumination system.

10. An illumination device according to claim 9, **characterized in that** it includes a complementary illumination system (20) of the illumination system (11), in the sighting area (Z) of the camera, an optical component (21) being interposed in order to allow reflection or transmission towards the collar surface (s) of the illumination provided for the complementary illumination system (20) on the one hand, and transmission and reflection towards the camera (6), of the light rays reflected by the collar surface (s) respectively, on the other hand.

11. An illumination device according to claim 10, **characterized in that** it includes means for controlling the illumination system (11) and the complementary illumination system (20), with which combined or individual operation of the illuminations systems (11, 20, 40, 45, 48) may be selected.

12. An optical inspection station for determining the presence of defects on the surface of the collar of a transparent or translucent container (4) **characterized in that** it includes:
- an illumination device (1) in accordance with any one of claims 2 to 11;
- a camera (6) placed for recovering the light beam reflected by the surface (s) of the collar of the container; and
- an analysis and processing unit (7) connected to the camera (6) and adapted in order to analyze the image obtained from the video signal delivered by the camera in order to determine the presence of a surface defect.
